# FASCICULE DE BREVET EUROPEEN

(11) **EP 0 544 595 B1**
(45) Date de publication et mention de la délivrance du brevet: **17.02.1999**
(21) Numéro de dépôt: 92403188.3
(22) Date de dépôt: 26.11.1992
(51) Int. Cl.: G02B 6/44, G02B 6/04

(54) **Câble optique multi-fibres, et son procédé de fabrication**
Mehradriges optisches Kabel und Verfahren zu seiner Herstellung
Multifibre optical cable and method of its fabrication

(30) Priorité: 26.11.1991 FR 9114561
(43) Date de publication de la demande: 02.06.1993
(73) Titulaire: FORT FIBRES OPTIQUES RECHERCHE ET TECHNOLOGIE, F-91410 Dourdan (FR)
(72) Inventeur: Fort, François, F-75007 Paris (FR)
(74) Mandataire: Doireau, Marc

(56) Documents cités:
- EP-A- 442 658
- DE-A- 2 220 284
- DE-A- 2 521 659
- DE-A- 2 734 152
- DE-B- 2 516 663
- GB-A- 1 423 590
- PATENT ABSTRACTS OF JAPAN vol. 9, no. 329 (P-416)(2052) 24 Décembre 1985 & JP-A-60 154 204 ( SUMITOMO ) 13 Août 1985
- PATENT ABSTRACTS OF JAPAN vol. 6, no. 229 (P-155)(1107) 16 Novembre 1982 & JP-A-57 132 102 ( FURUKAWA ) 16 Août 1982

## Description

La présente Invention concerne un câble optique multi-fibres, du type comprenant un ensemble de fibres optiques constituées chacune d'une âme en silice revêtue d'une gaine optique et d'un revêtement protecteur.

Il est connu du document JP-A-60 154 204 un câble optique où les fibres sont assemblées suivant un faisceau dans lequel les fibres sont parallèles les unes aux autres.

Il est aussi connu de réaliser des câbles optiques multi-fibres du type précité, à partir d'une ossature d'assemblage formée d'un jonc dont la surface périphérique externe comporte une série de rainures longitudinales s'étendant globalement parallèlement à l'axe du jonc, une fibre optique étant logée dans chacune de ces rainures. La structure du câble est complétée par une gaine extérieure avec, le plus souvent, interposition de revêtements protecteurs intermédiaires, qui sont notamment destinés à conférer au câble une tenue mécanique et thermique suffisante, et à le protéger des agents extérieurs, en fonction des applications envisagées et des conditions d'utilisation.

Il est également connu de réaliser des câbles optiques multi-fibres du type précité, à partir d'une ossature formée d'un ensemble de tubes, une ou plusieurs fibres étant logées dans chaque tube. Ces tubes sont assemblés suivant une couronne autour d'un élément porteur. La structure du câble est complétée, comme précédemment, par une gaine extérieure avec interposition de revêtements protecteurs intermédiaires.

Tout câble optique multi-fibres est caractérisé par un ensemble de paramètres qui concernent notamment, ses propriétés optiques (atténuation, bande passante) et ses propriétés mécaniques (masse, rayon de courbure minimal, traction minimale autorisée, température de service,...). A ces différentes caractéristiques techniques, il faut également ajouter celle concernant son diamètre extérieur qui est au moins de dix millimètres, pour des câbles précités qui renferment une dizaine de fibres.

Selon le résumé du document JP-A-57-132102 publié dans le périodique "Patent Abstracts of Japan", volume 6, numéro 229, on décrit un câble optique formé par un toron de fibres optiques, qui est successivement recouvert d'un revêtement constitué d'une couche de matière plastique adhésive, puis d'une gaine en matière plastique.

Le but de l'invention est de concevoir un nouveau type de câble optique multi-fibres pour la transmission d'informations, qui permette notamment de réduire substantiellement son diamètre extérieur, sans pour autant nuire à ses propriétés optiques et mécaniques.

A cet effet, l'invention propose un câble optique multi-fibres pour la transmission d'informations, du type comprenant un ensemble de fibres optiques constituées chacune d'une âme en silice revêtue d'une gaine optique et d'un revêtement protecteur, lesdites fibres étant assemblées de manière à former directement un toron, le toron étant revêtu d'un revêtement protecteur intermédiaire et d'une gaine extérieure en matière plastique, caractérisé en ce que :
- le revêtement protecteur de la gaine optique est constitué par une résine époxy-acrylate, et
- le revêtement protecteur intermédiaire du toron est constitué par du silicone.

La matière plastique constituant la gaine extérieure du câble est du polyéthérimide.

La structure d'un tel câble permet notamment de supprimer l'ossature intermédiaire qui était jusque-là nécessaire pour supporter ou loger les différents câbles, puisque cette ossature est directement formée par le toron de fibres optiques.

Il en résulte la possibilité d'obtenir un câble dont le diamètre extérieur peut être ramené à deux millimètres environ, pour un câble comportant une dizaine de fibres optiques.

D'autres avantages, caractéristiques et détails de l'Invention ressortiront de la description explicative qui va suivre faite en référence à la figure annexée donnée uniquement à titre d'exemple, et qui est une vue en perspective, avec arrachements partiels, d'un tronçon de câble optique multi-fibres conforme à l'Invention.

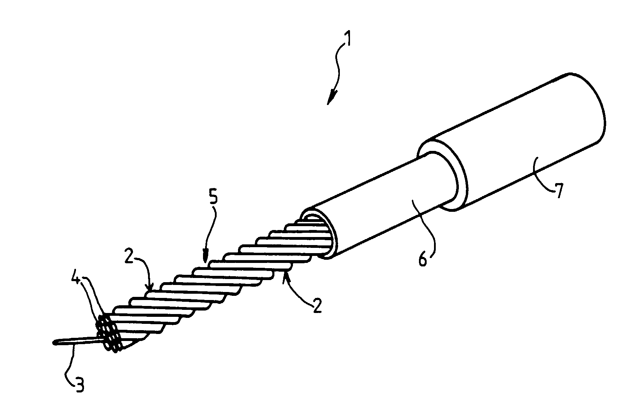

Le câble optique multi-fibres 1 selon l'Invention, tel qu'illustré à la figure 1, comprend un ensemble de fibres optiques 2. Chaque fibre 2, d'une manière connue en soi, est constituée d'une âme revêtue d'une gaine optique 3 et d'un premier revêtement protecteur 4. Ce revêtement 4 est avantageusement en un matériau, tel que la résine époxy-acrylate, qui protège notamment l'âme et la gaine optique de la fibre 2 contre tout phénomène d'oxydation.

Selon l'Invention, les fibres optiques 2 sont directement toronnées ensemble pour former un toron 5 clairement illustré à la figure 1, ce toron conférant une bonne tenue mécanique au câble 1.

Dans l'exemple considéré ici, le toron 5 est recouvert d'un revêtement protecteur intermédiaire 6, en silicone par exemple, et d'une gaine extérieure 7 en une matière plastique rigide, telle que du polyéthérimide, ayant des propriétés mécaniques et thermiques appropriées. Bien entendu, les fibres 2 sont directement toronnées ensemble suivant un pas qui évite de créer des affaiblissements linéiques de plusieurs dB qui seraient inacceptables pour des fibres de très haute qualité.

L'absence de structure d'assemblage pour loger ou supporter les fibres optiques, permet de réaliser des câbles dont le diamètre extérieur est notablement réduit par rapport aux câbles classiques. A titre d'exemple, avec un toron 5 formé directement à partir de douze fibres optiques, il est possible d'obtenir un diamètre extérieur du câble de l'ordre de deux millimètres environ, sachant que l'âme et la gaine optique de la fibre ont un diamètre de l'ordre de 125, ce diamètre passant à 250 microns environ, après le dépôt du revêtement 4 en époxy-acrylate.

Un procédé de fabrication d'un tel câble 1 consiste à réaliser l'âme et la gaine en silice d'une fibre optique par une opération d'étirage, connue en soi, qui est complétée par l'application du revêtement protecteur 4, en résine époxy-acrylate par exemple, et la fibre 2 est enroulée sur une bobine. Ensuite, plusieurs fibres optiques 2 sont déroulées et toronnées directement entre elles pour former un toron 5 qui est revêtu d'une gaine extérieure 7 en matière plastique avec, comme dans le mode de réalisation illustré à la figure 1, interposition d'un revêtement intermédiaire 6 en silicone par exemple.

## Revendications

1. Câble optique multi-fibres pour la transmission d'informations, du type comprenant un ensemble de fibres optiques (2) constituées chacune d'une âme en silice revêtue d'une gaine optique (3) et d'un revêtement protecteur (4), lesdites fibres étant assemblées de manière à former directement un toron (5), le toron (5) étant revêtu d'un revêtement protecteur intermédiaire (6) et d'une gaine extérieure (7) en matière plastique, caractérisé en ce que :
- le revêtement protecteur (4) de la gaine optique (3) est constitué par une résine époxy-acrylate, et
- le revêtement protecteur intermédiaire (6) du toron (5) est constitué par du silicone.

2. Câble optique multi-fibres selon la revendication 1, caractérisé en ce que la matière plastique constituant la gaine extérieure est du polyéthérimide.

## Patentansprüche

1. Mehradriges optisches Kabel für die Übertragung von Informationen, das von dem Typ ist, der eine Gruppe von optischen Faser (2) aufweist, die jeweils eine Seele aus Kieselsäureanhydrid, die mit einer optischen Umhüllung (3) überzogen ist, und einen Schutzüberzug (4) aufweisen, wobei die Fasern in einer Weise zusammengefügt sind, daß diese direkt eine Litze (5) bilden, wobei die Litze (5) mit einem zwischengeordneten Schutzüberzug (6) und einer äußeren Umhüllung (7) aus Plastmaterial überzogen ist, dadurch gekennzeichnet, daß
der Schutzüberzug (4) der optischen Umhüllung (3) aus einem Epoxyacrylatharz gebildet ist und
der zwischengeordnete Schutzüberzug (6) der Litze (5) aus Silikon gebildet ist.

2. Mehradriges optisches Kabel nach Anspruch 1, das dadurch gekennzeichnet ist, daß das Plastmaterial, das die äußere Umhüllung bildet, aus Polyetherimid ist.

## Claims

1. Multifibre optic cable for transmission of information, of the type comprising a system of optic fibres (2) each made of core of silica covered with an optic sheath (3) and a protective covering (4), the said fibres being assembled in a manner such as to form a strand (5) directly, the strand (5) being covered with an intermediate protective covering (6) and an external sheath (7) of a material of plastic, characterized in that:
- the protective covering (4) of the optic sheath (3) is made of an epoxy-acrylate resin and
- the intermediate protective covering (6) of the strand (5) is made of silicone.

2. Multifibre optic cable according to claim 1, characterized in that the material of plastic of which the external sheath is made is a polyether-imide.
